# EUROPÄISCHE PATENTSCHRIFT

(11) **EP 0 708 938 B1**
(45) Veröffentlichungstag und Bekanntmachung des Hinweises auf die Patenterteilung: **05.02.1997**
(21) Anmeldenummer: 94920395.4
(22) Anmeldetag: 12.07.1994
(51) Int. Cl.: G05D 22/02

(54) **SCHALTUNGSANORDNUNG ZUR REGELUNG DER LEISTUNG EINES HEIZELEMENTS EINER HEIZEINRICHTUNG ZUM TROCKNEN EINER LAUFENDEN BAHN**
CIRCUIT ASSEMBLY FOR CONTROLLING THE OUTPUT OF THE HEATING ELEMENT OF A HEATER FOR DRYING A CONTINUOUS STRIP OF MATERIAL
AGENCEMENT DE CIRCUITS POUR LA REGULATION DE LA PUISSANCE D'UN ELEMENT CHAUFFANT FAISANT PARTIE D'UN DISPOSITIF DE CHAUFFAGE UTILISE POUR SECHER UNE BANDE EN MOUVEMENT

(30) Priorität: 13.07.1993 DE 4323379
(43) Veröffentlichungstag der Anmeldung: 01.05.1996
(73) Patentinhaber: KRIEGER GmbH & CO. KG., D-41238 Mönchengladbach (DE)
(72) Erfinder: VIVEKENS, Werner, D-41334 Nettetal (DE); WLOTZKA, Bernhard, D-41189 Mönchengladbach (DE); KRIEGER, Detlev, D-41469 Neuss (DE)
(74) Vertreter: Thul, Hermann, Dipl.-Phys.
(86) Internationale Anmeldenummer: DE9400790
(87) Internationale Veröffentlichungsnummer: WO9502858

(56) Entgegenhaltungen:
- US-A- 4 859 926
- US-A- 5 010 659
- ELECTRONICS LETTERS, Bd.23, Nr.11, 21. Mai 1987, ENAGE GB Seiten 549 - 551 HINCHLIFFE ET AL 'voltage-fed transistorised induction heating power supply'

## Beschreibung

Die vorliegende Erfindung betrifft eine Schaltungsanordnung zur Regelung der Leistung eines Heizelements einer Heizeinrichtung zum Trocknen einer laufenden Bahn, bei der die Heizleistung in Abhängigkeit einer mittels eines Signalgebers in situ gemessenen, von der Feuchtigkeit des von dem Heizelement beheizten Flächenstücks der Bahn abhängigen Meßgröße geregelt wird.

Es ist bereits seit längerem bekannt, zur gezielten Trocknung von laufenden Bahnen sich quer zu ihrer Laufrichtung über die gesamte Bahnbreite erstreckende Heizeinrichtungen zu verwenden. Zur Erzielung gewünschter Feuchtigkeitsprofile quer zur Bahnrichtung (Profiling) und/oder zur Vermeidung lokaler Überhitzungen bzw. Untertemperaturen sind solchartige Heizeinrichtungen üblicherweise zumindest quer zur Bahnrichtung - teilweise zusätzlich auch in Bahnrichtung - in mehrere Heizelemente unterteilt, deren Wärmeabstrahlung einzeln regelbar ist. Dazu wird der Feuchtigkeitsgehalt der Bahn in Querrichtung mittels eines in Laufrichtung der Bahn vor und/oder hinter der Heizeinrichtung angeordneten Feuchtegebers gemessen und dem Regler als Regelgröße zugeleitet. Um bei dem Trend zu immer höheren Bahngeschwindigkeiten eine ausreichende Trocknung zu bewirken und um ein Profiling der Bahnen überhaupt erst zu ermöglichen, muß die Energiedichte (abgestrahlte Wärmemenge pro Zeiteinheit) der einzelnen Heizelemente hoch sein.

Lassen sich die geforderten Energiedichten sowohl mit Heizelementen, die mit fossilen Brennstoffen arbeiten, als auch mit elektrisch betriebenen Heizelementen erreichen, so stellt deren genaue Regelung, durch die unter Berücksichtigung der Feuchtigkeitsverteilung in der Bahn vor der Wärmeeinwirkung durch die gezielte Trocknung ein gewünschtes Feuchtigkeitsprofil der Bahn erzeugt werden soll, hohe technische Anforderungen an die Regelung.

Bei mit fossilen Brennstoffen arbeitenden Heizelementen ergibt sich das Problem der bei hohen Bahngeschwindigkeiten notwendigen schnellen Regelbarkeit der Heizelemente über weite Temperaturbereiche. Insbesondere muß sich die Heizleistung der einzelnen Heizelemente schnell drosseln lassen, ohne daß der Verbrennungsvorgang dabei vollständig gelöscht und eine anschließende Neuzündung erforderlich wird. Auch ist eine präzise Brennstoffregelungseinrichtung wegen der notwendigen Vielzahl mechanischer Regelventile aufwendig in ihrer Konstruktion und Herstellung und erfordert in hohes Maß an Wartungsaufwand.

Es finden daher zunehmend elektrisch arbeitende Heizeinrichtungen Verwendung, bei denen jedes von einer separaten Regeleinheit angesteuerte, mittels eines Gebläses zwangsgekühlte Heizelement aus einer Mehrzahl von Infrarotstrahlröhren besteht. Die Leistungsaufnahme pro Heizelement liegt in der Größenordnung von 20 kW. Kleine Heizeinrichtungen, die meist über ca. 20 Heizelemente verfügen, erreichen damit bereits Leistungen von etwa einem halben Megawatt. Neben einem durch den Einsatz von Halbleiterbauelementen einfachen Aufbau der elektrischen Regeleinheit ist es bei elektrisch betriebenen Heizelementen von Vorteil, daß im Falle in Laufrichtung der Bahn ausgerichteter, parallel zueinander verlaufender Infrarotstrahlröhren durch deren getrennte Ansteuerung eine feinere Unterteilung des quer zur Bahn verlaufenden "Heizrasters" und dadurch ein effektiveres Profiling möglich wird.

Eine Schaltungsanordnung zur Regelung der Leistung eines elektrischen Heizelements ist aus der US-PS 4,859,926 bekannt, die je Heizelement einen zentralen, die Eingangsgrößen "Feuchtigkeit des Bahnabschnitts", "Leistungsspannung" und "Leistungsstrom" digital verarbeitenden zentralen Regelprozessor umfaßt, welcher einen mit dem Heizelement in Reihe geschalteten elektronischen Leistungsschalter ansteuert. Der mit der Netzfrequenz synchronisierte Regelprozessor unterteilt jede Halbwelle der Einphasenwechselspannung in ein von seiner Rechengeschwindigkeit abhängiges Zeitraster, in dessen einzelnen Bereichen (den sog. Zündungsschlitzen) der elektronische Leistungsschalter entweder gezündet oder gelöscht wird, je nach der für die gewünschte Trocknung erforderlichen Heizleistung.

Ist es bei dieser Schaltungsanordnung prinzipiell möglich, das Zeitraster sehr fein zu unterteilen, so geht dies jedoch mit der Forderung nach einer hohen Rechengeschwindigkeit einher, wodurch sich die Kosten für den zentralen Regelprozessor erheblich erhöhen. Eine bei kostengünstigen Prozessoren geringere Rechengeschwindigkeit wirkt sich nachteilig auf wichtige Größen wie den Leistungsfaktor sowie die Gleichmäßigkeit des Abstrahlverhaltens der Heizelemente aus. Auch werden durch die Verwendung einer Einphasenwechselspannung die Phasen des Drehstromnetzes unterschiedlich stark belastet.

Diese Nachteile sucht die Schaltungsanordnung gemäß der EP 0 390 459 A2 dadurch zu verbessern, daß die Heizelemente mit einer Dreiphasenwechselspannung beaufschlagt werden, wobei eine die Leistung eines Heizelements an den gewünschten Feuchtewert anpassende Regeleinheit einen elektronischen Leistungsschalter pro Phase umfaßt. Mittel zur Signalverarbeitung, welche auf einen Feuchtegeber und auf die Nulldurchgänge der Dreiphasenwechselspannung reagieren, betätigen die elektronischen Leistungsschalter zum Ein- bzw. Abschalten von Halbwellen oder Teilen von Halbwellen (Phasenanschnittssteuerung) der ein Heizelement beaufschlagenden Dreiphasenwechselspannung, wodurch eine Heizleistungsanpassung an einen durch den Feuchtegeber vorgegebenen Wert erfolgt.

Kann bei dieser Schaltungsanordnung auf einen aufwendigen zentralen Prozessor verzichtet werden, so ist es von Nachteil, daß insbesondere beim Regeln von geringen Heizleistungen durch den zeitlichen Abstand der an den Heizelementen anliegenden Spannungspulse die pro Zeiteinheit abgestrahlte Wärmemenge kurzzeitigen Schwankungen unterliegt, wodurch bei hohen Bahngeschwindigkeiten eine unerwünschte Feuchtevariation in Laufrichtung der Bahn auftreten kann. Auch ist mit der Schaltungsanordnung gemäß der EP 0 390 459 A2 lediglich eine Anfahrsteuerung zum Hochfahren des Leistungsstromes nach einer vorgegebenen Kennlinie vorgesehen, eine aktive Regelung des Leistungsstromes beim Einschalten kalter Heizstrahler ist nicht möglich.

Der Erfindung liegt die Aufgabe zugrunde, eine Schaltungsanordnung zur Regelung der Leistung eines Heizelements einer Heizeinrichtung zum Trocknen einer laufenden Bahn zu entwickeln, durch welche das Heizelement derart angesteuert wird, daß auch bei geringen Heizleistungen eine gleichmäßige Wärmeabstrahlung gewährleistet ist. Die Schaltungsanordnung soll weiterhin störunempfindlich und einfach in ihrem Aufbau sein, so daß auf die Verwendung kostenintensiver Regelungsprozessoren verzichtet werden kann.

Diese Aufgabe wird durch die in Anspruch 1 wiedergegebene Erfindung gelöst.

Dadurch, daß einem Meßwertgeber, dessen Ausgangssignal von der Feuchtigkeit des von dem Heizelement überstrichenen Flächenstücks der Bahn abhängig ist und somit die Regelgröße zur Ansteuerung des elektronischen Leistungsschalters bildet, ein als Pulsmodulator arbeitender Signalwandler nachgeschaltet ist, kann die Trägerfrequenz des Modulators gleichzeitig zur Erzeugung eines Zeitrasters, dessen einzelne Bereiche Zündungsschlitze für den elektronischen Leistungsschalter bilden, verwendet werden. Durch die Wahl der Trägerfrequenz ist durch diese Maßnahme eine sehr feine Unterteilung des Zeitrasters ohne den Einsatz kostenintensiver, schneller Prozessoren möglich.

Die feine Unterteilung des Zeitrasters führt zu einer sehr gleichmäßigen Wärmeabstrahlung des Heizelements, da der Leistungsstromkreis der Schaltungsanordnung als Gleichstromkreis ausgebildet ist. Durch diese Betriebsweise werden Schwankungen in der abgestrahlten Wärmemenge durch eine Überlagerung der durch die Trägerfrequenz vorgegebenen Zündungsfolge mit der Frequenz einer Wechselspannung im Betrieb des Heizelements vermieden.

Der elektronische Leistungsschalter kann direkt durch das pulsmodulierte Signal angesteuert werden, wenn gemäß Anspruch 2 der Signalwandler ein Pulsweitenmodulator ist, bei dem die Pulshöhe unabhängig von der Größe des zu modulierenden Meßsignals ist und sich das zu modulierende Meßsignal in der Pulsweite widerspiegelt, welche direkt die Zündungsdauer des elektronischen Leistungsschalters bestimmt.

Versuche haben gezeigt, daß eine zuverlässige Ansteuerung des elektronischen Leistungsschalters dann gegeben ist, wenn der Pulsweitenmodulator nach Anspruch 3 das Eingangssignal in ein Rechtecksignal der Frequenz 1 kHz und mit einem Tastverhältnis von etwa 0 bis 90 % umsetzt.

Eine Ansteuerschaltung gemäß Anspruch 4 ist bei einer Schaltungsanordnung, bei welcher das Eingangssignal pulsweitenmoduliert wird, nicht zwingend notwendig, ihre Verwendung jedoch zur Anpassung des pulsmodulierten Signals an verschiedene elektronische Leistungsschalter und zur galvanischen Abtrennung des Leistungsteiles vorteilhaft.

Bei der in den Leistungsstromkreis eingeschalteten Gleichrichteranordnung kann auf teure Kondensatorbatterien zur Glättung der Gleichspannung verzichtet werden, und es ist eine symmetrische Belastung des Drehstromnetzes gewährleistet, wenn nach Anspruch 5 die Gleichrichteranordnung eine sechspolige, den Drehstrom in einen gepulsten Gleichstrom umwandelnde Brückenschaltung ist.

Für den Einsatz als getakteter Leistungsschalter zum Schalten der Heizspannung besonders geeignet ist ein npn-Insulated Gate Bipolar Transistor (IGBT), welcher mit dem Heizelement in Reihe geschaltet ist (Anspruch 6), da bei dem IGBT der Regelstromkreis galvanisch von dem Leistungsstromkreis getrennt ist, wodurch die Betriebssicherheit der Schaltungsanordnung erhöht ist. Bei Verwendung herkömmlicher Thyristoren ist eine derartige Trennung nicht gegeben.

Zur Regelung des Anlaufstromes bei noch kaltem Heizelement und zum Schutz der Baugruppen der Schaltungsanordnung vor Stromüberhöhungen sowie zur Erhöhung der Funktionssicherheit ist gemäß Anspruch 7 eine Ausgestaltung der Schaltungsanordnung mit einem Leistungsstromgeber und einer Anlaufschaltung von Vorteil. Die Anlaufschaltung integriert nach dem Anfahren eines kalten Heizelements die diesem zugeführte Leistung und beeinflußt den am Ausgang der Steuerlogik anliegenden Heizleistungssollwert derart, daß bei kaltem Heizstrahler der Strom im Leistungsstromkreis einen maximal zulässigen Wert nicht überschreitet. Hat die integrierte Leistung nach dem Anfahren einen vorgegebenen Wert erreicht, so schaltet die Anlaufschaltung auf Normalbetrieb um, und die Heizleistung bestimmt sich direkt aus dem Vergleich von Heizleistungssoll- und -istwert.

Bei einer besonders vorteilhaften Ausführungsform der erfindungsgemäßen Schaltungsanordnung umfaßt die Anlaufschaltung gemäß Anspruch 8 einen Impulsgenerator, dessen Ausgangssignal in der Anlaufphase zur Begrenzung des Stromes von der Steuerlogik der Ansteuerschaltung zugeführt wird. Es ist durch diese Maßnahme möglich, für die Impulsfrequenz und Impulslänge während der Anlaufphase von der Taktfrequenz und dem Tastverhältnis des Signalwandlers verschiedene Werte zu wählen, die an die Eigenschaften des Heizelements während der Aufheizphase optimal angepaßt sind.

Eine weitere vorteilhafte Ausführungsform der erfindungsgemäßen Schaltungsanordnung weist die Merkmale des Anspruchs 9 auf. Durch den Einsatz des Timers kann die maximale Dauer der Anlaufphase begrenzt und bei Überschreiten abgeschaltet werden, so daß beim Auftreten eines Fehlers länger andauernde Überlastungen von Bauteilen der Schaltungsanordnung verhindert werden.

Eine Ausführungsform der Schaltungsanordnung, bei der die Dauer der Anlaufphase sich selbsttätig der dem Heizelement zugeführten Gesamtleistung nach dem Einschalten anpaßt, ist Gegenstand des Anspruchs 10.

Durch die Maßnahmen des Anspruchs 11 kann bei einer besonders bevorzugten Ausführungsform der erfindungsgemäßen Schaltung vermieden werden, daß auch bei einem kalten Heizelement der Strom auch nur kurzfristig einen höchstzulässigen Wert überschreitet.

Um auch den Meßkreis galvanisch von dem Leistungskreis zu trennen, ist es besonders vorteilhaft, wenn als Leistungsstromgeber eine Hallsonde mit nachgeschaltetem Signalverstärker Verwendung findet (Anspruch 12). Ein weiterer Vorteil ist die zu erwartende hohe Lebensdauer der Hallsonde. Beschädigungen des Heizelements und der Bauteile der Schaltungsanordnung auch während des Normalbetriebs durch Überschreitung des höchstzulässigen Stromes können durch die in Anspruch 13 wiedergegebenen Maßnahmen vermieden werden.

In der Zeichnung sind der prinzipielle Aufbau und die Wirkungsweise einer erfindungsgemäßen Schaltungsanordnung wiedergegeben. Es zeigen:
Fig. 1 das Blockschaltbild einer erfindungsgemäßen Schaltungsanordnung;
Fig. 2 das Blockschaltbild der den Strom des noch kalten Heizelements begrenzenden Anlauf schaltung sowie
Fig. 3 die an den Ausgängen der verschiedenen Einheiten der Schaltungsanordnung anliegenden Signale sowie
Fig. 4 eine Prinzipdarstellung einer mit erfindungsgemäßen Schaltungsanordnungen ausgestatteten Heizeinrichtung.

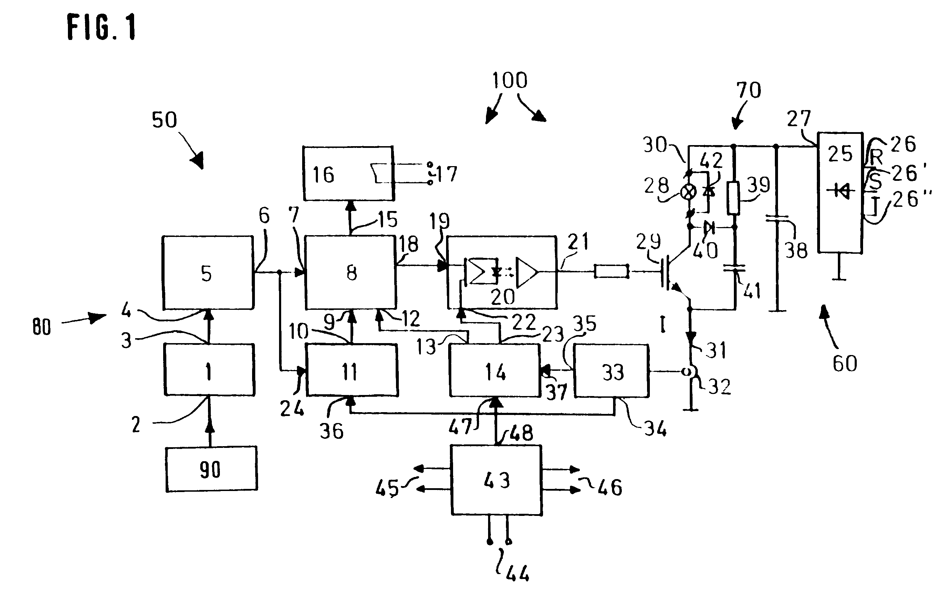

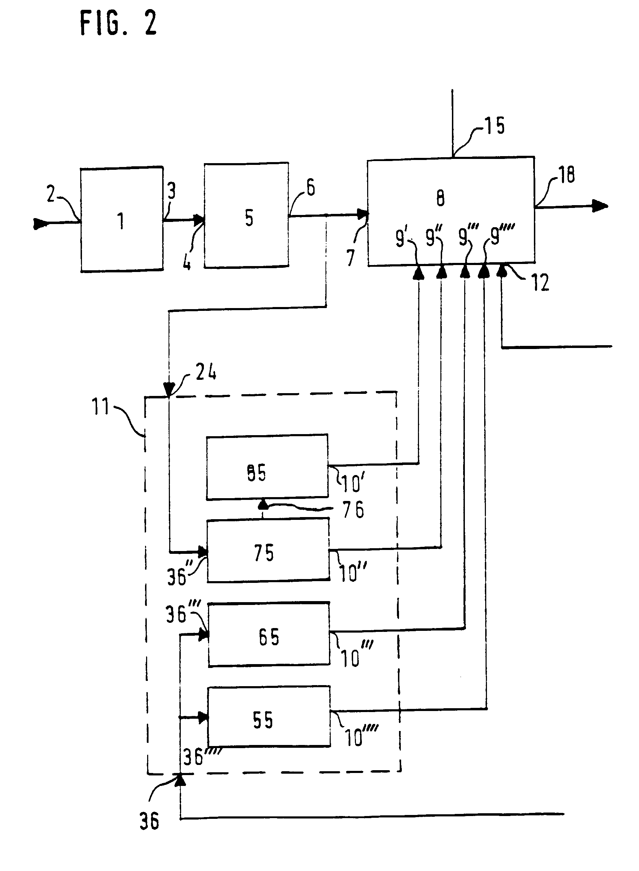

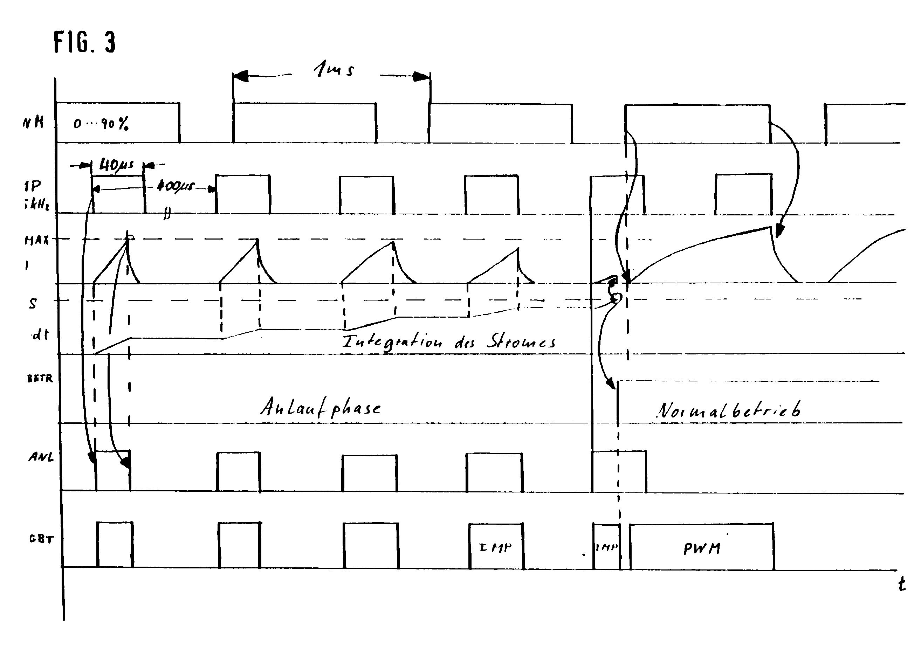

Die in Fig. 1 dargestellte Schaltungsanordnung 100 umfaßt einen Eingangsverstärker 1, dessen Eingang 2 mit einem die Feuchtigkeit des von dem zu regelnden Heizelement 28 beheizten Flächenstücks messenden Feuchtigkeitsgeber 90 verbunden ist. Die Empfindlichkeit des Eingangsverstärkers 1 kann an verschiedene Feuchtigkeitsgeber angepaßt werden. An seinem Ausgang 3 erzeugt der Eingangsverstärker 1 ein von dem Signal des Feuchtigkeitsgebers abhängiges Normsignal, mit welchem der Eingang 4 eines als Pulsweitenmodulator arbeitenden Signalwandlers 5 angesteuert wird. Der Eingangsverstärker 1 und der Signalwandler 5 bilden eine Eingangsschaltung 80. Der Signalwandler 5 setzt das Normsignal in ein an seinem Ausgang 6 anliegendes Rechtecksignal mit der Frequenz 1 kHz um, dessen zwischen 0 und 90 % liegendes Tastverhältnis von der Größe des Normsignals abhängt. Der Ausgang 6 des Signalwandlers 5 ist an einen ersten Eingang 7 einer Steuerlogik 8 und parallel an einen ersten Eingang 24 einer eine dosierte Leistungszuführung in Form einer Strombegrenzung im Falle eines noch kalten Heizelements bewirkenden Anlaufschaltung 11 angeschlossen. Während der Anlaufphase nach dem Anfahren des kalten Heizelements 28 integriert die Anlaufschaltung 11 den mit Hilfe eines noch zu beschreibenden Stromgebers 32 gemessenen Leistungsstrom I und regelt diesen in Abhängigkeit der nach dem Anfahren dem Heizelement 28 zugeführten Gesamtleistung auf einen dem momentanen Betriebszustand des Heizelements 28 angepaßten, dessen Aufheizverhalten optimierenden Wert, indem sie einen zweiten Eingang 9 der Steuerlogik 8 ansteuert. Der prinzipielle Aufbau und die Wirkungsweise der Anlaufschaltung 11 sollen anhand von Fig. 2 und 3 weiter unten beschrieben werden. Mit einem dritten Eingang 12 ist die Steuerlogik 8 weiterhin mit einem ersten Ausgang 13 einer Überwachungsschaltung 14 verbunden. Die Steuerlogik 8 verarbeitet die Signale des Signalwandlers 5 und der Anlaufschaltung 11 derart, daß während der Anlaufphase das am Ausgang 10 der Anlaufschaltung 11 anliegende Signal in einer weiter unten beschriebenen Weise die dem Heizelement 28 zugeführte Leistung regelt, wogegen während des Normalbetriebs die Leistungsregelung durch das Signal des Signalwandlers 5 erfolgt. Weiterhin verarbeitet die Steuerlogik 8 die Signale der Überwachungsschaltung 14 in einer Weise, daß unabhängig vom momentanen Betriebszustand des Heizstrahlers 28 der Leistungsstrom einen maximal zulässigen Wert nicht überschreitet.

Die Steuerlogik 8 steht mit ihrem ersten Ausgang 15 mit einer eine Leuchtdiodenanzeige umfassenden Statusanzeige 16 in Verbindung, welche die Betriebszustände der Schaltungsanordnung 100 über einen potentialfreien Kontakt 17 meldet. Ein zweiter Ausgang 18 der Steuerlogik 8, an welchem im Normalbetrieb das von dem Signalwandler 51 zugeführte pulsweitenmodulierte Signal anliegt, ist mit einem ersten Eingang 19 einer Ansteuerschaltung 20 verbunden, welche das Ausgangssignal der Steuerlogik 8 einem elektronischen Leistungsschalter zuführt und gegebenenfalls in eine zu seiner Ansteuerung geeignete, am Ausgang 21 anliegende Spannung umwandelt.

Die Ansteuerschaltung 20 ist zur schnellen Unterbrechung dieser Spannung im Falle einer Störung mit einem zweiten Eingang 22 an einen zweiten Ausgang 23 der Überwachungsschaltung 14 angeschlossen. Der Ausgang 21 der Ansteuerschaltung 20 ist von ihren Eingängen 19,22 galvanisch getrennt, wodurch eine galvanische Trennung des Regelstromkreises 50 von dem im Folgenden zu beschreibenden Leistungsstromkreis 60 erzielt wird.

Der Leistungsstromkreis 60 der Schaltungsanordnung 100 umfaßt eine als sechspolige Brückenschaltung ausgeführte Gleichrichteranordnung 25, welche mit ihren Eingängen 26,26',26" an die drei Phasen R,S,T des Drehstromnetzes angeschlossen ist. Die Gleichrichteranordnung 25 erzeugt an ihrem Ausgang 27 gegen das Nulleiterpotential eine gepulste Gleichspannung von ca. 500 V, mit welcher ein Heizelement 28 beaufschlagt wird. In Reihenschaltung zu dem etwa 20 kW Leistung aufweisenden Heizelement 28 befindet sich ein als npn - Insulated Gate Bipolar Transistor (IGBT) ausgeführter elektronischer Leistungsschalter 29 derart, daß das Heizelement 28 in den Kollektorkreis 30 des Leistungsschalters 29 eingeschaltet ist. Im Emitterkreis 31 des Leistungsschalters 29 befindet sich ein den Leistungsstrom I messender, als Hallsonde ausgebildeter Stromgeber 32, dem ein Signalverstärker 33 nachgeschaltet ist. Über den Stromgeber 32 galvanisch von dem Leistungsstromkreis 60 getrennt liefert der Signalverstärker 33 an seinem ersten und zweiten Ausgang 34,35 ein vom Leistungsstrom I abhängiges Signal, welches einerseits einem zweiten Eingang 36 der Anlaufschaltung 11, andererseits einem ersten Eingang 37 der Überwachungsschaltung 14 zugeleitet wird und der Regelung des pulsmodulierten Signals am Ausgang 18 der Steuerlogik 8 während der Anlaufphase und bei Überschreitung eines maximal zulässigen Leistungsstromes sowie bei sprunghaft ansteigendem Leistungsstrom - z.B. durch einen Kurzschluß - der Schnellabschaltung des am Ausgang 21 der Ansteuerschaltung 20 anliegenden Signals dient.

Zur Glättung der gepulsten Gleichspannung ist parallel zur Gleichrichteranordnung 25 ein Glättungskondensator 38 geschaltet. Dem Schutz des IGBT's vor Überspannungen dient eine aus einer Reihenschaltung eines Widerstandes 39 und einer in Sperrichtung geschalteten Diode 40 bestehende RCD-Schutzschaltung 70, welche parallel zu dem Heizelement 28 dem Kollektorkreis 30 des IGBT's 29 zugeschaltet ist. Auf der Verbindungslinie von dem Widerstand 39 und der Diode 40 ist der erste Anschluß eines Kondensators 41 angeordnet, dessen zweiter Anschluß in den Emitterkreis 31 des IGBT's 29 eingeschaltet ist. Weiterhin ist parallel zu dem Heizelement 28 eine in Sperrichtung geschaltete Freilaufdiode 42 geschaltet, welche die Überspannung, die beim Abschalten des Leistungsstromes entsteht, in den Leistungsstromkreis 60 zurückführt. Neben einem Schutz des IGBT's 29 wird durch die demzufolge begrenzte Spannungssteilheit die beim Abschalten im IGBT auftretende Verlustleistung minimiert. Desweiteren minimiert die gesamte Schutzbeschaltung 70 eine EMV-Störstrahlung.

Der Bereitstellung der Betriebsspannung der in dem Regelstromkreis 50 befindlichen Schaltungselemente dient eine einen 24 V Wechselstromeingang 44 aufweisende Spannungsversorgungsanordnung 43, welche einen ersten Gleichspannungsausgang 45 zur Versorgung aller im Regelstromkreis 50 befindlichen Schaltungselemente außer der Ansteuerschaltung 20 sowie einen zweiten, von dem Gleichspannungsausgang 45 galvanisch getrennten Gleichspannungsausgang 46 zur Versorgung der Ansteuerschaltung 20 aufweist. Desweiteren umfaßt die Spannungsversorgungsanordnung 43 einen mit einem zweiten Eingang 47 der Überwachungsschaltung 14 verbundenen Ausgang 48, der ein von der Eingangsspannung der Spannungsversorgungsanordnung 43 abhängiges Kontrollsignal an die Überwachungsschaltung 14 liefert.

Die Überwachungsschaltung 14 weist zur Kontrolle der Schaltungsanordnung 100 während des Betriebs mehrere Sicherheitsfunktionen auf. Sie erkennt folgende fehlerhafte Betriebszustände:
1. der IGBT 29 schaltet nicht (Unterbrechungsdefekt),
2. der mittels der Hallsonde 32 gemessene Leistungsstrom überschreitet den zulässigen Höchstwert (Kurzschlußdefekt),
3. fehlende Spannung im Leistungsstromkreis 60 (z.B. Ausfall der Sicherungen),
4. Unterspannung in der Ansteuerschaltung 20.

Aus Gründen der Betriebssicherheit wird der IGBT 29 abgeschaltet, wenn eine der obigen Störungen gemeldet wird.

Sofern keine der beschriebenen Überwachungsfunktionen angesprochen hat, steuert die den Sanftanlauf in der Einschaltphase des Heizelements 28 bewirkende Anlauf schaltung 11 die Leistungszuführung des Heizelements 28 und die Umschaltung in den Steuerbetrieb nach folgenden Kriterien:
1. die gemessene, integrierte Leistungsaufnahme (Energie) hat einen bestimmten Sollwert, welcher den Übergang vom Kalt- zum Warmwiderstand des Heizelements 28 charakterisiert, überschritten, so daß der Strom I durch den Innenwiderstand des Heizelements 28 begrenzt wird, oder
2. eine vorgegebene Maximaldauer der Einschaltphase ist abgelaufen. Dieser Fall tritt regelmäßig beim Wiedereinschalten eines noch warmen Heizelements 28 auf, da aufgrund der durch den erhöhten Warmwiderstand des Heizelements 28 geringeren Strom I der Sollwert der gemessenen, integrierten Leistungsaufnahme erst zu einem späteren Zeitpunkt erreicht wird.

Anhand von Fig. 2 und 3 soll die Wirkungsweise der Anlaufschaltung 11, die sich im einzelnen aus einem Komparator 55, einem Integrator/Komparator 65, einem Timer 75 und einem Impulsgenerator 85 zusammensetzt, erläutert werden.

Sobald der Eingang 7 der Steuerlogik 8 mit einem pulsweitenmodulierten Signal PWM beaufschlagt wird, verarbeitet die Steuerlogik die an deren Eingängen 9',9",9"',9"" anliegenden Signale, die ihr von den Ausgängen 10',10",10"',10"" der einzelnen Baugruppen der Anlaufschaltung 11 zugeführt werden, in folgender Weise:

Während des noch kalten Heizelements 28, d.h. während der Anlaufphase, wird die Ansteuerschaltung 20 an ihrem Eingang 19 mit einem rechteckförmigen Signal IMP beaufschlagt, welches vom Ausgang 10' des Impulsgenerators 85 dem Eingang 9' der Steuerlogik 8 zugeführt wird. Die maximale Impulsdauer dieses Signals beträgt, wie aus Fig. 3 ersichtlich, 40 µs, die Impulsfrequenz f 2,5 kHz. Während dieser Anlaufphase wird bereits mittels der Hallsonde 32 der Strom I, mit dem das Heizelement 28 beaufschlagt wird, gemessen. Der entsprechende Meßwert U_{H}, der in aufbereiteter Form an dem Ausgang 34 des Signalverstärkers 33 anliegt, wird parallel den Eingängen 36"",36"' des Komparators 55 und des Integrators/Komparators 65 zugeführt. Wird ein Meßwert U_{HMAX} erreicht, welcher einem Strom I von etwa 100 A entspricht, schaltet das am Ausgang 10"" des Komparators 55 anliegende Signal DISANL für die Dauer der laufenden Periode des Impulsgenerators 85, die aufgrund der Frequenz f von 2,5 kHz 400 µs beträgt, das am Ausgang 18 der Steuerlogik 8 anliegende Signal ab.

Die mittels der Hallsonde 32 und dem Signalverstärker 33 gemessenen Spannungsimpulse U_{H} werden von dem Integrator/Komparator auf integriert. Sobald ein vorgewählter, einer bestimmten Leistung, mit der das Heizelement seit seinem Kaltstart beaufschlagt wurde, entsprechender Schwellwert U_{S} gemäß ∫U_{H} dt erreicht wird, wird über den Ausgang 10"' des Integrators/Komparators 65 dem Eingang 9"' der Steuerlogik 8 ein konstantes Spannungssignal U_{NBETR} zugeführt, wodurch die Steuerlogik 8 auf Normalbetrieb umschaltet und an deren Ausgang 18 das pulsmodulierte Signal PWM des Signalwandlers 5 anliegt.

Das am Ausgang 6 des Signalwandlers 5 anliegende, pulsweitenmodulierte Signal PWM wird ebenfalls dem Eingang 36" des Timers 75 zugeführt. Dieser ermittelt die Zeit, die seit dem Anfahren des kalten Heizelements vergangen ist. Hat nach 22 s das Integral über die Spannung ∫U_{H} dt den vorgewählten Schwellwert Us noch nicht erreicht, so wird über einen Ausgang 10" der Eingang 9" mit einem Signal FREIG beaufschlagt, worauf die Steuerlogik 8 das an ihrem Ausgang 18 anliegende Signal abschaltet. Diese Funktion des Timers 75 dient dem Schutz der Schaltungsanordnung, da durch sie bei Auftreten eines Fehlers, der zu einer unzureichenden Leistungszuführung zu dem Heizelement führt, eine länger andauernde eventuelle Überbelastung der Schaltungsbauteile vermieden wird.

Verläuft die Anlaufphase normal, d.h. wird innerhalb der 22 s der Schwellwert U_{S} erreicht, so wird über die Verbindung 76 der Impulsgenerator 85 abgeschaltet, da, wie bereits erläutert, im Normalbetrieb das am Ausgang 6 des Signalwandlers 5 anliegende pulsweitenmodulierte Signal PWM dem Ausgang 18 der Steuerlogik 8 und damit dem Eingang der Ansteuerschaltung 20 zugeführt wird.

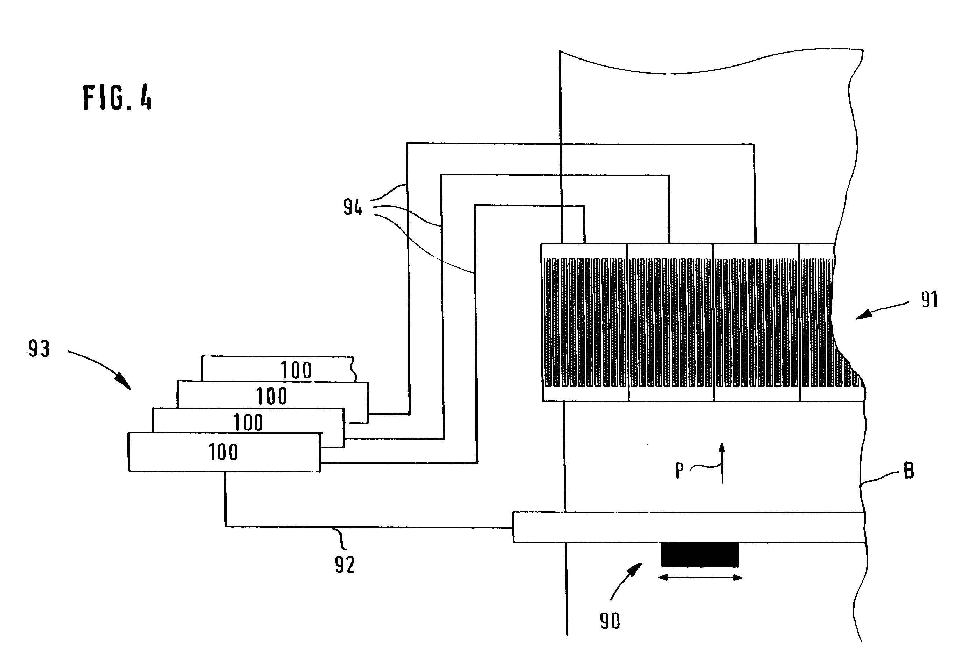

In Fig. 4 ist der prinzipielle Aufbau einer elektrische Heizelemente 28 umfassenden Vorrichtung zum Trocknen einer laufenden Bahn B ihrem Prinzip nach dargestellt, welche zur Regelung eines jeden der die Heizeinrichtung bildenden Heizelemente eine erfindungsgemäße Schaltungsanordnung 100 umfaßt.

In der durch den Pfeil P gekennzeichneten Laufrichtung der Bahn B gesehen vor der Heizeinrichtung 91 ist der in Querrichtung zur Bahn verlagerbare Feuchtegeber 90 angeordnet. Er wird oberhalb der laufenden Bahn B quer zur Laufrichtung P periodisch hin- und herbewegt.

Über eine elektrische Verbindung 92 wird ein Regelteil 93 mit Informationen über die jeweilige Position des Feuchtegebers 90 und dem in dieser Position gemessenen Feuchtewert beaufschlagt. Das Regelteil 93 umfaßt mehrere erfindungsgemäße Schaltungsanordnungen 100, die jeweils - wie die Verbindungslinien 94 verdeutlichen sollen - mit einem Heizelement 28 in der weiter oben beschriebenen Weise korrespondieren. Mit anderen Worten: jedes Heizelement 28 der Heizeinrichtung 91 wird von einer separaten Schaltungsanordnung 100 entsprechend der von dem Feuchtegeber 90 übermittelten Feuchtigkeits- und Positionswerte zur Erzielung eines vorwählbaren Feuchtigkeitsprofils angesteuert.

## Patentansprüche

1. Schaltungsanordnung (100) zur Regelung der Leistung eines Heizelements (28) einer Heizeinrichtung zum Trocknen einer laufenden Bahn in Abhängigkeit einer mittels eines Signalgebers in situ gemessenen, von der Feuchtigkeit des von dem Heizelement (28) beheizten Flächenstücks der Bahn abhängigen Meßgröße,
mit einem eine Gleichrichteranordnung (25) umfassenden Leistungsstromkreis (60), in den das Heizelement (28) und ein elektronischer Leistungsschalter (29) zur Regelung des in dem Leistungsstromkreis fließenden Leistungsstroms (I), mit dem das Heizelement beaufschlagt wird, eingeschaltet sind,
mit einer Eingangsschaltung (80), welche einen Signalwandler (5) umfaßt, der die Meßgröße in ein pulsmoduliertes Signal umwandelt,
und mit einer von dem Signalwandler (5) angesteuerten Steuerlogik (8) zur Begrenzung des Leistungsstromes auf einen maximal zulässigen Wert während der Anlaufphase des noch kalten Heizelements und zur Regelung des Leistungsstromes während des Normalbetriebs des auf Betriebstemperatur befindlichen Heizelements (28), deren Ausgangssignal den Heizleistungssollwert bildet.

2. Schaltungsanordnung nach Anspruch 1, **dadurch gekennzeichnet,** daß der als Pulsmodulator arbeitende Signalwandler (5) ein Pulsweitenmodulator ist.

3. Schaltungsanordnung nach Anspruch 2, **dadurch gekennzeichnet,** daß der als Pulsweitenmodulator arbeitende Signalwandler (5) das Eingangssignal in ein Rechtecksignal mit der Frequenz 1 kHz und einem Tastverhältnis von etwa 0 bis 90 % umsetzt.

4. Schaltungsanordnung nach einem der Ansprüche 1 bis 3, **dadurch gekennzeichnet,** daß eine Ansteuerschaltung (20) vorgesehen ist, mit welcher das Ausgangssignal der Steuerlogik (8) an den elektronischen Leistungsschalter (29) anpaßbar ist und deren Ausgang von ihren Eingängen galvanisch getrennt ist.

5. Schaltungsanordnung nach einem der Ansprüche 1 bis 4, **dadurch gekennzeichnet,** daß die Gleichrichteranordnung (25) eine die Phasen einer Drehstromversorgung gleichmäßig belastende, sechspolige Brückenschaltung ist, die den Drehstrom in einen gepulsten Gleichstrom umwandelt.

6. Schaltungsanordnung nach einem der Ansprüche 1 bis 5, **dadurch gekennzeichnet,** daß der elektronische Leistungsschalter (29) ein npn-Insulated Gate Bipolar Transistor (IGBT) ist, in dessen Kollektorkreis das Heizelement (28) eingeschaltet ist.

7. Schaltungsanordnung nach einem der Ansprüche 1 bis 6, **dadurch gekennzeichnet,** daß die Steuerlogik (8) mit einer Anlaufschaltung (11) zur Begrenzung des Einschaltstromes verbunden ist, welcher an einem ersten Eingang (24) das pulsmodulierte Signal zugeführt und welche an einem zweiten Eingang von einem in den Leistungsstromkreis (60) eingeschalteten Stromgeber (32) angesteuert wird.

8. Schaltungsanordnung nach Anspruch 7, **dadurch gekennzeichnet**, daß die Anlauf schaltung (11) einen Impulsgeneratur (85) umfaßt, dessen Ausgangssignal in der Anlaufphase zur Begrenzung des Stromes von der Steuerlogik (8) der Ansteuerschaltung (20) zugeführt wird.

9. Schaltungsanordnung nach Anspruch 8, **dadurch gekennzeichnet,** daß die Anlaufschaltung (11) einen mit der Steuerlogik (8) verbundenen Timer (75) umfaßt, der die Zeit nach dem Einschalten der Schaltungsanordnung mißt und nach einer vorwählbaren Zeitspanne, welche die Dauer der Anlaufphase bestimmt, ein Signal an die Steuerlogik (8) abgibt, worauf deren Ausgang (18) von dem Ausgangssignal des Impulsgenerators (85) entkoppelt wird.

10. Schaltungsanordnung nach einem der Ansprüche 7 bis 9, **dadurch gekennzeichnet,** daß die Anlaufschaltung (11) einen Integrator/Komparator umfaßt, welcher mit der Steuerlogik 8 und dem Stromgeber (32) verbunden ist und den nach dem Einschalten der Schaltungsanordnung geflossenen Strom integriert und bei Erreichen eines vorgewählten Gesamtstromes ein Signal an die Steuerlogik (8) abgibt, so daß diese mit dem an ihrem Eingang (7) anliegenden pulsmodulierten Signal des Signalwandlers (5) den elektronischen Leistungsschalter (29) bzw. die Ansteuerschaltung (20) baeaufschlagt.

11. Schaltungsanordnung nach einem der Ansprüche 8 bis 10, **dadurch gekennzeichnet,** daß die Anlaufschaltung (11) einen mit dem gemessenen Wert für den Leistungsstrom (I) beaufschlagten und mit der Steuerlogik (8) verbundenen Komparator (55) umfaßt, welcher bei Erreichen eines vorwählbaren Wertes des Leistungsstromes (I) das an den elektronischen Leistungsschalter (29) bzw. an die Ansteuerschaltung (20) abgegebene Signal der Steuerlogik für die zeitlich laufende Periode des Signals des Impulsgenerators (85) abschaltet.

12. Schaltungsanordnung nach einem der Ansprüche 7 bis 11, **dadurch gekennzeichnet,** daß der Stromgeber (32) eine Hallsonde mit nachgeschaltetem Signalverstärker (33) ist.

13. Schaltungsanordnung nach einem der Ansprüche 7 bis 13, **gekennzeichnet durch** eine Überwachungsschaltung (14), welche das Ausgangssignal der Steuerlogik (8) (Sollwert der Heizleistung), das Signal der Ansteuerschaltung (20) und das Signal des Stromgebers (32) (Istwert des Leistungsstromes) registriert und bei Ausfall eines der Signale oder bei Überschreitung eines zulässigen Maximalwertes den Leistungsstrom durch Unterbrechung des Ansteuersignals der Ansteuerschaltung (20) abschaltet.

## Claims

1. Circuit arrangement (100) for controlling the power of a heating element (28) of a heating apparatus for drying a moving web as a function of a measured variable which is measured in situ by means of a signal-sensor and depends on the moisture of the portion of the area of the web heated by the heating element (28),
having a power circuit (60) comprising a rectifier arrangement (25) and into which the heating element (28) and an electronic power switch (29) for controlling the power current (I) which flows in the power circuit and which is applied to the heating element are connected,
having an input circuit (80) which comprises a signal converter (5) which converts the measured value into a pulse-modulated signal,
and having a control logic means (8) driven by the signal converter (5), for limiting the power current to a maximum permissible value during the start-up phase of the still cold heating element and for controlling the power current during the normal operation of the heating element (28) which is at operating temperature, the output signal from said logic means forming the heating power desired value.

2. Circuit arrangement according to Claim 1, characterized in that the signal converter (5) operating as pulse modulator is a pulse width modulator.

3. Circuit arrangement according to Claim 2, characterized in that the signal converter (5) operating as pulse-width modulator converts the input signal into a square-wave signal having the frequency 1 kHz and a duty factor of about 0 to 90%.

4. Circuit arrangement according to one of Claims 1 to 3, characterized in that a drive circuit (20) is provided with which the output signal of the control logic means (8) can be matched to the electronic power switch (29) and whose output is galvanically isolated from its inputs.

5. Circuit arrangement according to one of Claims 1 to 4, characterized in that the rectifier arrangement (25) is a six-pole bridge circuit which loads the phases of a three-phase supply uniformly, and which converts the three-phase current into a pulsed direct current.

6. Circuit arrangement according to one of Claims 1 to 5, characterized in that the electronic power switch (29) is an npn insulated gate bipolar transistor (IGBT), into whose connector circuit the heating element (28) is connected.

7. Circuit arrangement according to one of Claims 1 to 6, characterized in that the control logic means (8) is connected to a start-up circuit (11) for limiting the switch-on current, to which start-up circuit the pulse-modulated signal is fed at a first input (24) and which is driven at a second input by a current sensor (32) connected into the power circuit (60).

8. Circuit arrangement according to Claim 7, characterized in that the start-up circuit (11) comprises a pulse generator (85), whose output signal, in the start-up phase, is fed by the control logic means (8) to the drive circuit (20) for limiting the current.

9. Circuit arrangement according to Claim 8, characterized in that the start-up circuit (11) comprises a timer (75) which is connected to the control logic means (8), measures the time following the switching on of the circuit arrangement and, following a preselectable time span, which determines the duration of the start-up phase, emits a signal to the control logic means (8), whereupon the output (18) of the latter is decoupled from the output signal of the pulse generator (85).

10. Circuit arrangement according to one of Claims 7 to 9, characterized in that the start-up circuit (11) comprises an integrator/comparator which is connected to the control logic means 8 and to the current sensor (32) and integrates the current which has flowed following the switching on of the circuit arrangement and, on reaching a preselected overall current, emits a signal to the control logic means (8), with the result that the latter applies to the electronic power switch (29) and/or the drive circuit (20) the pulse-modulated signal from the signal converter (5) which is present at its input (7).

11. Circuit arrangement according to one of Claims 8 to 10, characterized in that the start-up circuit (11) comprises a comparator (55) to which the measured value for the power current (I) is applied and which is connected to the control logic means (8), and which, on reaching a preselectable value of the power current (I), switches off the signal emitted by the control logic means to the electronic power switch (29) and/or to the drive circuit (20) for the running time period of the signal of the pulse generator (85).

12. Circuit arrangement according to one of Claims 7 to 11, characterized in that the current sensor (32) is a Hall probe with a downstream signal amplifier (33).

13. Circuit arrangement according to one of Claims 7 to 13, characterized by a monitoring circuit (14), which registers the output signal of the control logic means (8) (desired value of the heating power), the signal of the drive circuit (20) and the signal of the current sensor (32) (actual value of the power current) and, in the event of failure of one of the signals or in the event of exceeding a permissible maximum value of the power current, switches off by interrupting the drive signal of the drive circuit (20).

## Revendications

1. Agencement de circuits (100) pour la régulation de la puissance d'un élément chauffant (28) faisant partie d'un dispositif de chauffage utilisé pour sécher une bande en mouvement en fonction d'une grandeur de mesure dépendant de l'humidité de l'élément de surface de bande chauffé par l'élément chauffant (28), mesurée in situ au moyen d'un générateur de signaux,
avec un circuit électrique de puissance (60) comportant un agencement de redressement (25), dans lequel l'élément chauffant (28) et un commutateur électronique de puissance (29) pour la régulation du courant d'alimentation (I) circulant dans le circuit électrique de puissance qui alimente l'élément chauffant sont enclenchés,
avec un circuit d'entrée (80) qui comporte un convertisseur de signaux (5) qui convertit la grandeur de mesure en un signal de modulation d'impulsion,
et avec une logique de commande (8) pilotée par le convertisseur de signaux (5) pour limiter le courant d'alimentation à une valeur maximale admissible pendant la phase de démarrage de l'élément chauffant encore froid et pour la régulation au courant d'alimentation pendant le fonctionnement normal de l'élément chauffant (28) se trouvant à la température ce fonctionnement, dont le signal de sortie représente la valeur de consigne de la puissance de chauffage.

2. Agencement de circuits selon la revendication 1, caractérisé en ce que le convertisseur de signaux (5) fonctionnant en modulateur d'impulsion est un modulateur de largeur d'impulsion.

3. Agencement de circuits selon la revendication 2, caractérisé en ce que le convertisseur de signaux (5) fonctionnant en modulateur de largeur d'impulsion convertit le signal d'entrée en un signal rectangulaire de fréquence 1 kHz et de rapport cyclique d'environ 0 à 90 %.

4. Agencement de circuits selon l'une des revendications 1 à 3, caractérisé en ce ou'il est prévu un circuit de pilotage (20) qui permet d'adapter le signal de sortie de la logique de commande (8) au commutateur électronique de puissance (29) et dont la sortie est séparée galvaniquement de ses entrées.

5. Agencement de circuits selon l'une des revendications 1 à 4, caractérisé en ce que l'agencement de redressement (25) est un montage en pont sextupolaire chargeant uniformément les phases d'une alimentation triphasée qui convertit le courant triphasé en un courant continu pulsé.

6. Agencement de circuits selon l'une des revendications 1 à 5, caractérisé en ce que le commutateur électronique de puissance (29) est un Insulated Gate Bipolar Transistor npn (IGBT) dans le circuit collecteur duquel l'élément chauffant (28) est inséré.

7. Agencement de circuits selon l'une des revendications 1 à 6, caractérisé en ce que la logique ce commande (8) est reliée à un circuit de démarrage (11) pour la limitation du courant d'enclenchement qui reçoit le signal modulé en impulsion sur une première entrée (24) et qui est piloté sur une seconde entrée par le capteur de courant (32) inséré dans le circuit de puissance (60).

8. Agencement de circuits selon la revendication 7, caractérisé en ce que le circuit de démarrage (11) comprend un générateur d'impulsions (85) dont le signal de sortie est amené de la logique de commande (8) au circuit de pilotage (20) pour la limitation du courant pendant la phase de démarrage.

9. Agencement de circuits selon la revendication 8, caractérisé en ce que le circuit de démarrage (11) comprend une horloge (75) raccordée à la logique de commande (8), qui mesure le temps écoulé après l'enclenchement de l'agencement de circuits et qui délivre un signal à la logique de commande (8) après un temps prédéterminé qui définit la durée de la phase de démarrage, après quoi sa sortie (18) est désaccouplée du signal de sortie du générateur d'impulsions (85).

10. Agencement de circuits selon l'une des revendications 7 à 9, caractérisé en ce que le circuit de démarrage (11) comporte un intégrateur/comparateur qui est relié à la logique de commande (8) et au capteur de courant (32) et qui intègre le courant qui circule dans l'agencement de circuits après l'enclenchement et fournit à la logique de commande (8) un signal au moment d'atteindre un courant total prédéfini, de sorte que celle-ci alimente le commutateur électronique de puissance (29) respectivement le circuit de pilotage (20) avec le signal modulé en impulsion du convertisseur de signaux (5) présent sur son entrée (7).

11. Agencement de circuits selon l'une des revendications 8 à 10, caractérisé en ce que le circuit de démarrage (11) comporte un comparateur (55) alimenté par la valeur mesurée au courant d'alimentation (I) et relié à la logique de commande (8), qui en atteignant une valeur prédéfinissable du courant d'alimentation (I), coupe le signal délivré au commutateur électronique de puissance (29) respectivement au circuit de pilotage (20) de la logique de commande pour la période de temps courante du signal du générateur d'impulsions (85).

12. Agencement de circuits selon l'une des revendications 7 à 11, caractérisé en ce que le capteur de courant (32) est une sonde à effet Hall suivie d'un amplificateur de signaux (33).

13. Agencement de circuits selon l'une des revendications 7 à 13, caractérisé par un circuit de surveillance (14), qui saisit le signal de sortie de la logique de commande (8) (valeur de consigne de la puissance de chauffage), le signal du circuit de pilotage (20) et le signal du capteur de courant (32) (valeur courante du courant d'alimentation) et qui coupe le courant d'alimentation par l'interruption du signal de pilotage du circuit de pilotage (20) en cas de disparition de l'un des signaux ou en cas de dépassement d'une valeur maximale admissible.
